# EUROPEAN PATENT SPECIFICATION

(11) **EP 2 440 614 B1**
(45) Date of publication and mention of the grant of the patent: **18.10.2017**
(21) Application number: 10786654.3
(22) Date of filing: 08.06.2010
(51) Int. Cl.: C08L 39/06

(54) **THE MANIPULATION OF CLOUD POINT FOR TWO-PHASE, AQUEOUS POLYMERIC SYSTEMS**
MANIPULATION DES TRÜBUNGSPUNKTES FÜR ZWEIPHASIGE WÄSSRIGE POLYMERSYSTEME
MANIPULATION DU POINT DE TROUBLE POUR DES SYSTÈMES POLYMÉRIQUES AQUEUX À DEUX PHASES

(30) Priority: 08.06.2009 US 184969 P
(43) Date of publication of application: 18.04.2012
(73) Proprietor: ISP Investments Inc., Wilmington, DE 19805 (US)
(72) Inventor: HOOD, David, K., Basking Ridge NJ 07920 (US); MUSA, Osama, M., Hillsborough NJ 08844 (US); KAMIN, Surya, Skillman NJ 08558 (US)
(74) Representative: Bülle, Jan
(86) International application number: PCT/US2010/037693
(87) International publication number: WO 2010/144392

(56) References cited:
- US-A- 5 614 583
- US-A1- 2002 058 750
- US-A1- 2002 058 750
- US-A1- 2007 009 683
- US-A1- 2007 202 064
- US-A1- 2008 206 164
- US-A1- 2008 279 804

## Description

### CROSS REFERENCE TO RELATED APPLICATION

This application claims the benefit of U.S. Provisional Application No. 61/184969 filed June 8,2009, the contents of which are hereby incorporated by reference.

### BACKGROUND

The cloud point temperature (CPT) of a polymer is defined as the temperature at which a transparent polymer solution exhibits the first sign of cloudiness. This solution cloudiness is an indication of polymer non-solvency, or in other words, polymer precipitation.

At temperatures beyond the CPT, some polymers exhibit gel formation. This gel formation can be in the form of discrete polymer particles that are reversible, in which the gelled precipitate is capable of re-solubilizing, or non-reversible, where the gelled precipitate is permanently in-solubilized. This temperature is defined as the gel point temperature (GPT).

Macromolecules comprised of lactam monomers, such as N-vinyl-2-pyrrolidone (VP) and N-vinyl-2-caprolactam (VCL), are known to exhibit cloud points. For example, polyvinyl pyrrolidone (PVP) exhibits an aqueous Theta temperature, as determined by the cloud point titration method, of 130.5° F (Brandrup et al. Polymer Handbook, 4th ed., J. Wiley and Sons, New York, pg. VII/306, 1999.)

In the presence of salts, the cloud point temperature (CPT) of PVP can be decreased. Sekikawa et al. (Chem. Pharm. Bull. 26(8) 2489-2496 (1978)) report that the CPT of PVP generally decreases, linearly, with increasing salt concentration. For example, in the presence of 0.8 Molar ammonium sulfate, the CPT of PVP is 20°C. While differing in the rate, similar effects were also demonstrated for sodium chloride and potassium chloride salts.

Sekikawa et al. also report that additions of some derivatives of urea, such as urea, methyl urea, and 1,3-dimethyl urea can result in increasing the cloud point of the PVP/ammonium sulfate solution. Conversely, thiourea and 1,3-dimethylthiourea result in lower cloud point temperatures of the PVP/ammonium sulfate solution.

Recently, Hood et al. (WO 02/22722 A1, and Journal of Applied Polymer Science, 89, 734- 741 (2003)) presented a novel, two-phase composition of polyvinyl pyrrolidone comprised of water soluble polyvinyl pyrrolidone and poly(polyvinyl pyrrolidone) particles in water. This composition will be referred to as molecular-composite PVP or MCPVP. This system exhibits a GPT in the presence of salts. Similar compositions are also described in U.S. Pat. Nos. 6,458,888; 6,541,565; 6,548,597; 6,713,538, and 6,872,787, all of which are commonly assigned with the present application.

### SUMMARY

The present application discloses aqueous polymeric compositions comprising (a) a water-soluble polymer having (b) in situ-formed, substantially water-insoluble resinous particles of the polymer substantially uniformly dispersed therein, (c) a gel point temperature additive and (d) water. In accordance with certain embodiments, the polymeric compositions disclosed herein form clear to translucent films upon application to a substrate.

The polymeric composition comprises, by weight, 0.1-75% of (a) a water-soluble polymer having (b) in situ-formed, substantially water-insoluble resinous particles of said polymer substantially uniformly dispersed therein, (c) a gel point temperature additive, by weight 1 to 20%, and (d) 5% to 98.9% of water.

The polymer comprises a copolymer of vinyl pyrrolidone and vinyl caprolactam, and, optionally, one or more comonomers, including comonomers such as dimethylaminopropyl(meth)acrylamide (DMAPMA) and dimethylaminoethyl(meth)acrylate (DMAEMA).

In certain embodiments, the composition includes particles having a size of <500µ, more particularly <100µ, and in certain cases between>1 nm and <500µ.

Typically, the composition includes a substantially water-insoluble polymer which is a crosslinked or branched polymer, neutralized and/or quaternized, and/or functionalized quaternized. In particular embodiments, the ratio of (a):(b) is 20-95% to 5-80%, more particularly 20-75% to 25-80%, and the crosslinking agent is a substantially water-insoluble compound, such as pentaerythritol triallyl ether (PETE), or pentaerythritol tetraacrylate (PETA), preferably at least partially soluble in water, and the crosslinking agent may be present in an amount of 0.02-0.5% by weight of said composition, more particularly 0.05-0.3%.

The (polymer) composition, in accordance with certain embodiments, has a Brookfield viscosity of 1,000 to 45,000 cps, preferably 2,000 to 20,000 (at 10% polymer solids in water).

Also provided herein is a process for making a stable, aqueous polymeric composition which includes the steps of providing a reaction mixture of a water-soluble vinyl monomer, optionally with one or more water-soluble comonomers, a predetermined amount of a crosslinking agent and water, heating the mixture, then periodically adding a predetermined amount of an initiator, and polymerizing at about 30-130°C., optionally further including the step of diluting with water during or after the polymerization.

Suitably, the crosslinking agent may be present in an amount of 0.02-0.5 wt. % based on monomers present, and preferably is PETE or PETA, and the initiator is an azo initiator.

The compositions herein may be dried if desired to provide the polymeric composition as a solid. The dried stable polymeric composition thereby includes, by weight, (a) 20% to 95% of a water-soluble polymer, and (b) 5% to 80% of in situ-formed, substantially water-insoluble resinous particles of said polymer substantially uniformly dispersed therein in the presence of 2 to 15% of GPT additive.

### DETAILED DESCRIPTION

In accordance with the present application, there is provided herein an aqueous polymeric composition containing a gel point temperature additive wherein the composition has two phases therein, a water-soluble polymeric phase and a discrete, water-insoluble polymer particle phase which is generated in-situ during the polymerization of the monomers. The polymerization is carried out in aqueous solution comprising a copolymer of vinyl pyrrolidone and vinyl caprolactam. Optionally, a comonomer may be present to form a copolymer. Suitable comonomers include methacrylate/acrylate monomers, such as dimethylaminoethyl(meth)acrylate (DMAEMA) and/or methacrylamide/acrylamide monomers, such as dimethylaminopropylacrylamide (DMAPMA).

This stable, aqueous polymeric composition typically forms a clear to translucent film upon application to a substrate and the polymeric composition comprises, by weight, 0.1-75% of (a) a water-soluble polymer having (b) in situ-formed, substantially water-insoluble resinous particles of said polymer substantially uniformly dispersed therein, (c) a gel point temperature additive, by weight 1 to 20%, and (d) 5% to 98.9% of water.

The gel point temperature additive typically is added in an amount of about 1 to 20% by weight, more particularly from about 2 to 15% and in certain cases from about 5 to 10% based on the weight of the composition. Of course, amounts outside these ranges can be used depending on the polymeric composition and the GPT additive being used.

Classes of compounds suitable for modifying the GPT behavior of aqueous, two phase polymeric systems include, but are not limited to, amines (linear or cyclic), alcohols (linear or cyclic), amides (linear or cyclic), acids (linear or cyclic, organic or inorganic), thiols (linear or cyclic), and sulfoxides (linear or cyclic).

The GPT additive can also be a material comprised of one or more moieties of amines (linear or cyclic), alcohols (linear or cyclic), amides (linear or cyclic), acids (linear or cyclic, organic or inorganic), thiols (linear or cyclic), sulfoxides (linear or cyclic) functional moieties or mixtures of.

Compositions prepared in accordance with the present disclosure can be used in a variety of applications. Examples of some of the applications include UV protection, sunscreens, drug delivery systems (smart-delivery, smart-release), transdermal drug systems, textile or fiber sizings, dye transfer inhibition, autowaxes, agricultural coatings/delivery, personal care applications for hair and skin (i.e., shampoos, conditions, gels and creams), abrasives (industrial and personal), encapsulant systems, dispersants, electro/optical systems, oil field applications, coatings, cementitious compounds, adhesives, contrast mediums, wrinkle masking, cryoprotectants, marking instruments, flocculation moderators, lubricating oil additives, and lubricants.

The present application is illustrated in more detail by reference to the following non-limiting examples.

### EXAMPLE 1

The MCPVP polymer was weighed into a 400 ml capacity beaker, followed by DI water. Solution mixed until uniform. Sodium Chloride was then added and mixed until dissolved. The gel point additive, urea, was added and mixed until dissolved. Appearance of the solution was noted. Beaker was placed on a Thermolyne hot plate with magnetic stirrer. Solution was heated while stirring at medium speed. Temperature of the solution was noted with a thermometer immersed in the solution at the first sign of visual gel formation. The remaining examples would be prepared using the same basic procedure but substituting the components as indicated.

**Table 1: Gel Point Temperature Effect of Urea on MCPVP in aqueous NaCl salt solution**

| Ingredient | Mass (g) | Mass (g) |
|---|---|---|
| Water | 116.92 | 104.92 |
| MCPVP | 54.55 | 54.44 |
| Sodium Chloride | 28.53 | 28.53 |
| Urea | 0.0 | 12.0 |
| Total | 200 | 200 |
| GPT, °F | 168 | 200 |

### EXAMPLE 2

**Table 2: Gel Point Temperature Effect of DMSO on MCPVP in aqueous NaCl salt solution**

| Ingredient | Mass (g) | Mass (g) |
|---|---|---|
| Water | 116.92 | 104.92 |
| MCPVP | 54.55 | 54.44 |
| Sodium Chloride | 28.53 | 28.53 |
| DMSO | 0.0 | 12.0 |
| Total | 200 | 200 |
| GPT, °F | 168 | 198 |

### EXAMPLE 3

**Table 3: Gel Point Temperature Effect of Glycerol on MCPVP in aqueous NaCl salt solution**

| Ingredient | Mass (g) | Mass (g) |
|---|---|---|
| Water | 116.92 | 104.92 |
| MCPVP | 54.55 | 54.44 |
| Sodium Chloride | 28.53 | 28.53 |
| Glycerol | 0.0 | 12.0 |
| Total | 200 | 200 |
| GPT, °F | 168 | 186 |

### EXAMPLE 4

**Table 4: Gel Point Temperature Effect of Citric Acid on MCPVP in aqueous NaCl salt solution**

| Ingredient | Mass (g) | Mass (g) |
|---|---|---|
| Water | 116.92 | 104.92 |
| MCPVP | 54.55 | 54.44 |
| Sodium Chloride | 28.53 | 28.53 |
| Citric Acid | 0.0 | 12.0 |
| Total | 200 | 200 |
| GPT, °F | 168 | 105 |

### EXAMPLE 5

**Table 5: Gel Point Temperature Effect of 2-pyrrolidone on MCPVP in aqueous NaCl salt solution**

| Ingredient | Mass (g) | Mass (g) |
|---|---|---|
| Water | 116.92 | 104.92 |
| MCPVP | 54.55 | 54.44 |
| Sodium Chloride | 28.53 | 28.53 |
| 2-pyrrolidone | 0.0 | 12.0 |
| Total | 200 | 200 |
| GPT, °F | 168 | 212 |

### EXAMPLE 6

**Table 6: Gel Point Temperature Effect of 2-hydroxyethyl urea on MCPVP in aqueous NaCl salt solution**

| Ingredient | Mass (g) | Mass (g) |
|---|---|---|
| Water | 116.92 | 104.92 |
| MCPVP | 54.55 | 54.44 |
| Sodium Chloride | 28.53 | 28.53 |
| 2-hydroxyethyl urea | 0.0 | 12.0 |
| Total | 200 | 200 |
| GPT, °F | 168 | 202 |

### EXAMPLE 7

**Table 7: Gel Point Temperature Effect of diethanolamine on MCPVP in aqueous NaCl salt solution**

| Ingredient | Mass (g) | Mass (g) |
|---|---|---|
| Water | 116.92 | 114.92 |
| MCPVP | 54.55 | 54.44 |
| Sodium Chloride | 28.53 | 28.53 |
| Diethanolamine | 0.0 | 2.0 |
| Total | 200 | 200 |
| GPT, °F | 168 | 180 |

### EXAMPLE 8

**Table 8: Gel Point Temperature Effect of Urea on MCPVP in aqueous KCl salt solution**

| Ingredient | Mass (g) | Mass (g) |
|---|---|---|
| Water | 116.92 | 98.92 |
| MCPVP | 54.55 | 54.44 |
| Potassium Chloride | 28.53 | 28.53 |
| Urea | 0.0 | 18 |
| Total | 200 | 200 |
| GPT, °F | 174 | 206 |

The invention has been described in detail with particular reference to preferred embodiments thereof, but it will be understood that variations and modifications can be effected within the spirit and scope of the invention.

## Claims

1. An aqueous polymeric composition comprising, by weight, 0.1-75% of (a) a water-soluble polymer comprising a copolymer of vinyl pyrrolidone and vinyl caprolactam, and, optionally, one or more comonomers, including dimethylaminopropyl-(meth)acrylamide (DMAPMA) and/or dimethylaminoethyl(meth)acrylate (DMAEMA), having (b) in situ-formed, substantially water-insoluble resinous particles of said polymer substantially uniformly dispersed therein, (c) a gel point temperature additive, by weight 1 to 20%, and (d) 5% to 98.9% of water, wherein the ratio of (a):(b) is 20-95% to 5-80%.

2. A composition according to claim 1, wherein said gel point temperature additive is selected from the group consisting of amines, alcohols, amides, acids, thiols, and sulfoxides, functional moieties and mixtures thereof.

3. A composition according to claim 1, wherein said gel point temperature additive is a material comprised of one or more moieties selected from the group consisting of amines (linear or cyclic), alcohols (linear or cyclic), amides (linear or cyclic), acids (linear or cyclic, organic or inorganic), thiols (linear or cyclic), sulfoxides (linear or cyclic), functional moieties and mixtures thereof.

4. A composition according to claim 1, wherein said particles are < 500µ, preferably < 100µ.

5. A composition according to claim 1, wherein said substantially water-insoluble resinous particles are a crosslinked or branched polymer; preferably crosslinked with pentaerythritol triallyl ether (PETE) or pentaerythritol tetraacrylate (PETA).

6. A composition according to claim 1, wherein said composition comprises at least one component selected from the group consisting of a UV blocker, a sunscreen active, a pharmaceutical active, textile or fiber sizings, dye transfer inhibitors, autowaxes, an agricultural active, a personal care active for hair and/or skin, an abrasive material, a dispersant, an adhesive, a contrast material, lubricating oil additives, and lubricants.

7. A composition according to claim 1, wherein said composition forms a clear to translucent film upon application to a substrate.

## Patentansprüche

1. Wässrige Polymerzusammensetzung, umfassend 0,1-75 Gew.-% (a) eines wasserlöslichen Polymers, das ein Copolymer von Vinylpyrrolidon und Vinylcaprolactam und gegebenenfalls einem oder mehreren Comonomeren einschließlich Dimethylaminopropyl(meth)acrylamid (DMAPMA) und/oder Dimethylaminoethyl(meth)acrylat (DMAEMA) umfasst, mit (b) in situ gebildeten, weitgehend wasserunlöslichen Harzteilchen des Polymers, die darin weitgehend einheitlich dispergiert sind, (c) einem Gelpunkttemperaturadditiv, 1 bis 20 Gew.-%, und (d) 5 bis 98,9 Gew.-% Wasser, wobei das Verhältnis von (a): (b) 20-95% bis 5-80% beträgt.

2. Zusammensetzung nach Anspruch 1, wobei das Gelpunkttemperaturadditiv aus der Gruppe bestehend aus Aminen, Alkoholen, Amiden, Säuren, Thiolen und Sulfoxiden, funktionellen Gruppierungen und Mischungen davon ausgewählt ist.

3. Zusammensetzung nach Anspruch 1, wobei es sich bei dem Gelpunkttemperaturadditiv um eine Substanz handelt, die aus einer oder mehreren Gruppierungen aus der Gruppe bestehend aus Aminen (linear oder cyclisch), Alkoholen (linear oder cyclisch), Amiden (linear oder cyclisch), Säuren (linear oder cyclisch, organisch oder anorganisch), Thiolen (linear oder cyclisch), Sulfoxiden (linear oder cyclisch), funktionellen Gruppierungen und Mischungen davon ausgewählt ist.

4. Zusammensetzung nach Anspruch 1, wobei die Teilchen < 500 µ, vorzugsweise < 100 µ, sind.

5. Zusammensetzung nach Anspruch 1, wobei es sich bei den weitgehend wasserunlöslichen Harzteilchen um ein vernetztes oder verzweigtes Polymer handelt, das vorzugsweise mit Pentaerythritoltriallylether (PETE) oder Pentaerythritoltetraacrylat (PETA) vernetzt ist.

6. Zusammensetzung nach Anspruch 1, wobei die Zusammensetzung mindestens eine Komponente aus der Gruppe bestehend aus einem UV-Blocker, einem Sonnenschutzwirkstoff, einem pharmazeutischen Wirkstoff, Textil- oder Faserschlichten, Farbstoffübertragungsinhibitoren, Autowachsen, einem landwirtschaftlichen Wirkstoff, einem Körperpflegewirkstoff für Haar und/oder Haut, einem abrasiven Material, einem Dispergiermittel, einem Klebstoff, einem Kontrastmaterial, Schmieröladditiven und Schmierstoffen umfasst.

7. Zusammensetzung nach Anspruch 1, wobei die Zusammensetzung nach Aufbringen auf ein Substrat einen klaren bis transluzenten Film bildet.

## Revendications

1. Composition polymère aqueuse comprenant, en poids, 0,1-75% (a) d'un polymère hydrosoluble comprenant un copolymère de vinylpyrrolidone et de vinylcaprolactame, et éventuellement un ou plusieurs co-monomères, y compris du diméthylaminopropyl(méth)acrylamide (DMAPMA) et/ou du (méth)acrylate de diméthylaminoéthyle (DMAEMA), ayant (b) des particules résineuses sensiblement insolubles dans l'eau, et formées *in situ,* dudit polymère y étant dispersées sensiblement uniformément, (c) un additif de température de point de gel, de 1 à 20% en poids, et (d) de 5% à 98,9% d'eau, où le rapport (a) : (b) va de 20-95% à 5-80%.

2. Composition selon la revendication 1, dans laquelle ledit additif de température de point de gel est choisi dans le groupe constitué par les amines, les alcools, les amides, les acides, les thiols et les sulfoxydes, des motifs fonctionnels et des mélanges de ceux-ci.

3. Composition selon la revendication 1, dans laquelle ledit additif de température de point de gel est un matériau constitué d'un ou plusieurs motifs choisis dans le groupe constitué par les amines (linéaires ou cycliques), les alcools (linéaires ou cycliques), les amides (linéaires ou cycliques), les acides (linéaires ou cycliques, organiques ou inorganiques), les thiols (linéaires ou cycliques), les sulfoxydes (linéaires ou cycliques), des motifs fonctionnels et des mélanges de ceux-ci.

4. Composition selon la revendication 1, dans laquelle lesdites particules sont < 500 µ, préférablement < 100 µ.

5. Composition selon la revendication 1, dans laquelle lesdites particules résineuses sensiblement insolubles dans l'eau sont constituées d'un polymère réticulé ou ramifié ; préférablement réticulé par du pentaérythritol triallyléther (PETE) ou du tétraacrylate de pentaérythritol (PETA).

6. Composition selon la revendication 1, où ladite composition comprend au moins un composant choisi dans le groupe constitué par un agent anti-UV, un principe actif d'écran solaire, un principe actif pharmaceutique, des apprêts pour textiles ou fibres, des inhibiteurs de transfert de colorant, des cires pour automobiles, un principe actif agricole, un principe actif de soin personnel pour les cheveux et/ou la peau, un matériau abrasif, un agent de dispersion, un adhésif, un matériau de contraste, des additifs pour huile lubrifiante, et des lubrifiants.

7. Composition selon la revendication 1, où ladite composition forme un film transparent à translucide lors d'une application à un substrat.
